Europäisches Patentamt

European Patent Office

Office européen des brevets

(11) Publication number: **0 246 867 B1**

## EUROPEAN PATENT SPECIFICATION

(45) Date of publication of patent specification: **21.07.93**

(51) Int. Cl.5: **C08K 13/02**, C08L 27/06, //(C08K13/02,3:24,5:09)

(21) Application number: **87304441.6**

(22) Date of filing: **19.05.87**

The file contains technical information submitted after the application was filed and not included in this specification

(54) **Polyvinyl chloride molding powder.**

(30) Priority: **19.05.86 JP 114408/86**

(43) Date of publication of application:
**25.11.87 Bulletin 87/48**

(45) Publication of the grant of the patent:
**21.07.93 Bulletin 93/29**

(84) Designated Contracting States:
**BE DE FR GB IT NL**

(56) References cited:
**EP-A- 151 040**

**CHEMICAL ABSTRACTS, vol. 101, no. 22, 26th November 1984, page 47, abstract no. 193161p, Columbus, Ohio, US; & JP-A-59 140 261 (NISSAN FERRO ORGANIC CHEMICAL CO., LTD) 11-08-1984**

**CHEMICAL ABSTRACTS, vol. 104, no. 16, 21st April 1986, page 47, abstract no. 130940h, Columbus, Ohio, US; & JP-A-60 219 246 (NISSAN FERRO ORGANIC CHEMICAL CO., LTD) 01-11-1985**

**CHEMICAL ABSTRACTS, vol. 104, no. 20, 19th**

May 1986, page 46, abstract no. 169545h, Columbus, Ohio, US; & JP-A-60 219 247 (NISSAN FERRO ORGANIC CHEMICAL CO., LTD) 01-11-1985

(73) Proprietor: **SUMITOMO CHEMICAL COMPANY, LIMITED**
**Kitahama 4-chome 5-33**
**Chuo-ku Osaka 541(JP)**

(72) Inventor: **Kobayashi, Masanori**
**1-8-14, Okamoto Higashinada-ku**
**Kobe Hyogo-ken(JP)**
Inventor: **Matsuura, Isao**
**4-5-5-303, Kamihamuro**
**Takatsuki Osaka-fu(JP)**
Inventor: **Wakatsuki, Akira**
**2-1-132, Kuwatacho**
**Ibaraki Osaka-fu(JP)**
Inventor: **Shida, Yu**
**1-9-1-208, Tamagawa**
**Takatsuki Osaka-fu(JP)**

(74) Representative: **Geering, Keith Edwin et al**
**REDDIE & GROSE 16 Theobalds Road**
**London WC1X 8PL (GB)**

## Description

The present invention relates to a polyvinyl chloride resin composition for powder molding (especially for powder rotational molding or powder slush molding) useful particularly to produce covering materials for automobile interior parts such as crash pads, arm rests, head rests, console boxes, meter covers, door trims, etc.

In recent years, for such covering materials for automobile interior parts, those which are light, of soft feel and have embossed or stitched patterns giving a high grade surface effect have come into increased demand.

Hitherto, covering materials have included vacuum-formed soft sheet materials composed mainly of polyvinyl chloride resin and ABS resin, and rotational-molded or slush-molded products of a sol composed mainly of polyvinyl chloride resin paste with plasticizer (hereinafter referred to as sol molded product).

The vacuum-formed product is light, but it is of stiff rather than soft feel. Further, it is difficult to fabricate into products of complicated shape having embossed or stitched surface patterns.

Further the vacuum-formed product has the drawback that, because of its large residual strain on forming, cracks tend to form on long-term use.

On the other hand, the sol molded product has a soft feel, but the sol, because of its low gelation temperature, rapidly melts in the mold so that phenomena such as formation of flow marks, lip, stringiness of sol, etc. occur.

For this reason, the sol molded product has drawbacks that its inside surface lacks smoothness, discharge of the sol from the mold takes too long, and the thickness of the covering material becomes undesirably large.

Further, the sol has the problems that a great deal of labor is required to clean tanks, pipes, etc. for change of color, and that the viscosity changes with time so that the sol cannot be stored long-term.

In recent years, powder molding has attracted attention to solve these drawbacks and problems.

Generally, powder molding methods include fluidized bed coating, electrostatic coating, powder flame spray coating, powder rotational molding, powder slush molding techniques and the like. Particularly, the powder rotational molding and powder slush molding techniques are suitable for producing covering materials for automobile inner parts.

Powder rotational molding or powder slush molding are methods in which, by rotating or shaking an assembled unit of a mold kept at a temperature of 180°C or higher and a resin powder supply box, or injecting a resin powder into the mold, the resin powder is melt-attached or fused onto the inner surface of the mold, and the residual unfused powder is recovered automatically or forcedly into the box.

For heating the mold in powder molding, there may be used a gas furnace, circulation of a heat medium oil, dipping into a heat medium oil or heated flowing sand, high-frequency induction heating, etc.

The powder composition to be used in such powder molding should be of good flowability and moldability.

It is well known to prepare a powder composition by dry-blending a polyvinyl chloride resin with a plasticizer, stabilizer, pigment, etc. on a blender or high-speed rotating mixer equipped with a heating jacket.

In order to improve the flowability, it is also well known to add a finely powdered polyvinyl chloride resin and an inorganic filler such as finely powdered calcium carbonate, silica, etc. at the cooling step after completion of the dry-blending (Rubber Digest, Vol. 14, No. 8, pp. 32 - 40; polyvinyl Chloride - Its Chemistry and Industry II, pp. 367 - 370, 1968; and Japanese Patent Publication No. 1575/1962).

There is a great need for a powder composition for producing covering materials by powder molding, which has reduced tendency to mold staining during powder molding (hereinafter referred to as resistance to mold staining), preferably with resistance to amine staining which occurs on attachment of urethane material to the covering material (hereinafter referred to as amine resistance).

Powder molding is carried out by melt-attaching or fusing a powder composition onto the surface of a mold kept at a high temperature as described above, so that the surface of the mold is gradually stained as the number of molding shots increases.

When staining of the mold proceeds, the hollows of the embossed pattern on the inner surface of the mold become shallow because of accumulation of stain, and the resulting covering material becomes undesirably glossy. Also, when stain on the mold contains tacky substances, it becomes difficult to remove the formed covering material from the mold, and in some cases, undesirable hollows are formed on the surface of the covering material.

Consequently, it becomes necessary to suspend molding operations for cleaning the mold, as a result of which productivity is markedly reduced. Also, extra labor and chemicals (alkali solutions, acid solutions, halogenated hydrocarbon solvents used for cleaning) are required for cleaning. Further, when stain is too heavy to remove by simple cleaning, mechanical brushing (brass brushing, brushing with a forced jet of fine glass beads and air) is required. When such brushing is applied frequently, the life of the mold is shortened.

It becomes therefore very important industrially and economically to provide a powder composition which is superior in resistance to mold staining.

We previously undertook extensive research work to produce a powder molding composition resistant to mold staining, and, appreciating that no shear is applied in powder molding, achieved this by using a stabilizer of Ba and Zn soaps of fatty acids having alkyl groups of from 5 to 8 carbon atoms which are well compatible with polyvinyl chloride resins and plasticizers.

Stabilisers falling under the category of metal soaps of fatty acids having alkyl groups of 9 or more carbon atoms such as stearic acid ($C_{17}H_{35}COOH$), palmitic acid ($C_{15}H_{35}COOH$), lauric acid ($C_{11}H_{23}COOH$), caprylic acid ($C_9H_{19}COOH$), etc. and stabilisers falling under the category of metal soaps of oleic acid, linoleic acid, ricinoleic acid, hydroxystearic acid, etc. are poor in compatibility with polyvinyl chloride resins when they are used in powder molding wherein no shear is applied, and also they have a lubricating action in themselves, so that "plate out" easily occurs to give heavy stains to the mold. Further, with such metal soap stabilizers, blooming (the phenomenon of white powder breaking out on the surface of the formed covering materials) appears with the lapse of time. These stabilizers, therefore, are not suitable for powder molding.

On the other hand, stabilizers falling under the category of metal soaps of fatty acids having alkyl groups of from 5 to 8 carbon atoms such as nonanoic acid ($C_8H_{17}COOH$), octanoic acid ($C_7H_{15}COOH$), heptanoic acid ($C_6H_{13}COOH$), hexanoic acid ($C_5H_{11}COOH$), etc. are generally poor in thermal property and lubricating action and also difficult to produce, for which reason they have not been used much in extrusion and calendering, there being no example of powder molding wherein such metal soap stabilizer is used.

The present invention provides a powdery polyvinyl chloride resin composition which comprises by weight (i) 100 parts of polyvinyl chloride resin, (ii) 0.1 to 10 parts of stabilizer mixture represented by the formula:

$$(RCOO)_2Me$$

wherein R is selected from alkyl groups having 5 to 8 carbon atoms and Me represents a mixture of barium and zinc, the barium and zinc metallic weight ratio being 1:5 to 5:1, and (iii) from 0.1 to 10 parts of perchlorate ion type hydrotalcite compound.

The barium compound type stabilizers for use in the present invention include barium nonanoate, barium octanoate, barium 2-ethylhexanoate, barium heptanoate, barium hexanoate, etc. The zinc compound type stabilizers include zinc nonanoate, zinc octanoate, zinc 2-ethylhexanoate, zinc heptanoate, zinc hexanoate, etc.

Such barium compound type and zinc compound type stabilizers are used in combination or as a mixture, and a range of the metal weight ratio of barium to zinc is from 1:5 to 5:1. When the proportion of zinc exceeds said ratio of 1:5, there are such drawbacks that the dehydrochlorinating action of zinc is increased to lower the thermal resistance of the stabilizer during forming, and black spots and foams are produced on the formed covering materials. Such excessive amount of zinc (zinc compound) is not therefore preferred. On the other hand, when the proportion of barium exceeds said ratio of 5:1, a tendency for the covering materials to be colored, particularly red, at the initial stage of molding becomes marked. As a result, the color of the formed covering materials deviates from that desired which is undesirable for color matching.

The amount of the foregoing barium-zinc compound type stabilizer mixture to be used is from 0.1 to 10 parts by weight based on 100 parts by weight of polyvinyl chloride resin.

When said amount is less than 0.1 part by weight, the thermal resistance of the stabilizer during molding becomes poor, while when said amount is larger than 10 parts by weight, there is a tendency for the stabilizer to bleed to the surface of the covering materials, and the cost increases to become economically disadvantageous.

The covering materials of polyvinyl chloride composition for automobile interior parts are often used in a form into which a urethane resin is filled and foamed. In such urethane foaming, the first component composed mainly of a polyol, water, foaming agent, catalyst and other auxiliaries and the second component composed mainly or polyisocyanate are mixed and foamed in place in a mold. As catalysts there are used amine compounds such as ethylenediamine, triethylenediamine, triethylenetetramine, triethanolamine, etc. (which may be used alone or in combination) and their addition products with alkylene oxides such as ethylene oxide, propylene oxide, butylene oxide, epichlorohydrin, styrene oxide, etc. However, these amine compounds, on contact with the polyvinyl chloride covering materials, cause very rapid discoloration of the materials in the presence of heat and light, and promote deterioration and change in quality of the polyvinyl chloride resin.

Consequently, it is important to provide a polyvinyl chloride resin powder composition for forming covering materials having resistance to such amine compounds.

In powder rotational molding and powder slush molding, it is industrially and economically important to make resistance to mold staining and amine resistance compatible with each other, and lack of either of these properties precludes provision of ideal covering materials by powder molding. We have undertaken further research to provide a powder composition having good amine resistance and have accomplished this by the combined use of foregoing barium-zinc compound type stabilizer mixture and perchlorate ion type hydrotalcite compound.

In the course of conventional development of powder compositions having amine resistance, it was thought that what prevents discoloration by amines is the formation of a chelate compound of zinc compound type stabiiizer with the amine to inhibit the dehydrochlorinating action of the amine,or a complementary relationship which applies between the color of the chelate compound and a characteristic color of a complex compound produced by reaction of polyvinyl chloride resin with the amine.

Previously, we found that a magnesium compound has discoloration preventing ability in the thermal resistance and light resistance tests on the urethane-attached covering materials - Japanese Application 16594/1984 (EP-A-0151040). Because the covering materials, however, have come to be produced in smaller thickness by powder molding, the demand for amine resistance has also become stronger.

The same discoloration level as required for the conventional covering materials of 1 mm thickness produced by powder molding is now also required for covering materials of from 0.5 to 0.8 mm thickness. Consequently, disadvantages arise by merely using the magnesium compound type stabilizer as before.

The present invention uses perchlorate ion type hydrotalcite compound for the prevention of discoloration caused by amine compounds, particularly tertiary amine compounds.

The perchlorate ion type hydrotalcite compound used is of formula (II) below and can be produced by contacting hydrotalcite compound represented by the formula (I),

$$Mg_{1-x}Al_x(OH)_2 \cdot (CO_3)_{x/2} \cdot mH_2O \qquad (I)$$

wherein m represents a positive number of 5 or less and x is a number satisfying the equation, $0 < x \leq 0.5$, with an aqueous perchloric acid solution to replace $(CO_3)$ in the formula (I) with $(ClO_4)_2^{2-}$, to produce a compound of the following formula (II),

$$Mg_{1-x}Al_x(OH)_2 \cdot (ClO_4)_2 \cdot mH_2O \qquad (II)$$

wherein x and m are as defined above.

The hydrotalcite compound is excellent in halogencatching ability, but its ability is so large that, in severe conditions, it promotes dehydrochlorination from, for example, polyvinyl chloride resins, as a result of which coloration owing to the formation of polyenes is markedly promoted. Also, with the use of the hydrotalcite compound, the amine resistance of the urethane-attached polyvinyl chloride sheet is insufficient.

We have found that the perchlorate ion type hydrotalcite compound gives excellent amine resistance particularly to the urethane-attached polyvinyl chloride sheet. What mechanism this effect is based on is not clear, but it is considered to be based on two actions of this compound, one being action to lighten coloration caused by the formation of polyenes by the dehydrochlorination of polyvinyl chloride resin, and the other being action, which results from neutralization of the perchlorate ion with the amine, to reduce the dehydrochlorination of polyvinyl chloride resin by the amine.

The amount of the perchlorate ion type hydrotalcite compound to be used in the present invention is from 0.1 to 10 parts by weight based on 100 parts by-weight of the polyvinyl chloride resin used.

When said amount is less than 0.1 part by weight, the amine resistance is poor, while when it is larger than 10 parts by weight, the sheet strength of the formed covering materials deceases, and the cost becomes high, being economically disadvantageous.

The present invention can solve the two important problems of improvement in resistance to mold staining during power molding and amine resistance of the urethane-attached polyvinyl chloride sheet, by combining the foregoing barium-zinc compound type stabilizer with the perchlorate ion type hydrotalcite compound. These stabilizer and compound may be added to the composition, each alone, or in a mixed dispersion in a plasticizer.

We have also found that the effect of the present invention, particularly amine resistance, is further enhanced when the powder composition further contains a metal perchlorate. Preferably the amount of the perchlorate is 0.1 to 10 parts by weight per 100 parts by weight of the polyvinyl chloride resin. Examples of such metal perchlorate are magnesium perchlorate and barium perchlorate. The ratio of the perchlorate ion type hydrotalcite compound and metal perchlorate is not critical, but preferably 1:9 to 9:1 by weight.

In addition to these stabilizers, there may be used a further stabilizer such as calcium oleate, magnesium oxide, magnesium hydroxide, hydrotalcite compounds, zinc oxide, barium oxide, calcium oxide, barium phosphate, etc. Further, there may be used phenolic antioxidants, thioether antioxidants, hindered amine compounds, phosphite compounds, diketo compounds, ultraviolet absorbers (e.g. salicylate compounds, benzophenone compounds, benzotriazole compounds), epoxidized soybean oil, epoxidized compounds synthesized from bisphenol A and epichlorohydrin, etc.

The polyvinyl chloride resins for use in the present invention include those which are produced by suspension polymerization, bulk polymerization or emulsion polymerization, and for example there are given vinyl chloride polymers, copolymers of vinyl chloride with a compound copolymerizable therewith such as ethylene, propylene, vinyl acetate, etc., graft copolymers of an ethylene/vinyl acetate copolymer with vinyl chloride, and mixtures of two or more of them. However, the polyvinyl chloride resin of the present invention is not limited to these particular resins.

Plasticizers for use in the present invention include phthalic esters such as diisodecyl phthalate, diisoundecyl phthalate, di($C_9$-$C_{11}$)alkyl phthalates, etc., and trimellitic esters such as trioctyl trimellitate, tri-2-ethylhexyl trimellitate, tridecyl trimellitate, tri($C_7$-$C_9$ or $C_7$-$C_{11}$)alkyl trimellitates, etc.

Also, it is possible to use a small amount of epoxy plasticizers, polyester plasticizers, etc. The plasticizer to be used in the present invention, however, is not limited to these particular ones.

To the polyvinyl chloride resin composition of the present invention may be added filler and various auxiliaries, if desired, in addition to the plasticizer, stabilizer and pigment.

For the polyol, catalyst, foaming agent, polyisocyanate, etc. to be used in urethane foaming, the well-known ones commonly used in the production of polyurethane foams may be used.

The present invention will be illustrated specifically with reference to the following examples, but it is not limited to these particular examples.

Examples

To a 20-liter super-mixer was charged 2 kg of a straight polyvinyl chloride resin having an average polymerization degree of 700 produced by conventional suspension polymerization (Sumilit® SX-7GL; produced by Sumitomo Chemical Co., Ltd.). The resin was stirred at a predetermined rotation speed, and at the point when the resin temperature reached 80°C, dry blended with a plasticizer, stabilizer previously dispersed in the plasticizer, pigment and epoxidized soybean oil. When the dry-blend temperature reached 122°C, heating steam was shut off, and after completion of dry-blending, the dry blend was cooled to 50°C or lower by water cooling. Then the dry blend was uniformly mixed with 200 g of a finely powdered polyvinyl chloride resin (produced by Sumitomo Chemical Co., Ltd.) to obtain a powder composition of good flowability.

In preparing the compositions of Examples (present invention) and Comparative examples (for comparison) there were used the blending ratios shown in Table 1 with the total of the straight polyvinyl chloride resin and finely powdered polyvinyl chloride resin as 100 parts by weight, and these compositions were evaluated. The particulars of the stabilizers used are shown in Tables 2 and 3.

Table 1

Composition of powder

| | | |
|---|---|---|
| Straight polyvinyl chloride resin | 90 parts by weight | Sumilit® SX-7GL (produced by Sumitomo Chemical Co., Ltd.) |
| Finely powdered polyvinyl chloride resin | 10 parts by weight | Sumilit® PXQL (produced by Sumitomo Chemical Co., Ltd.) |
| Plasticizer:trioctyl tri-mellitate | 60 parts by weight | No. 8 (produced by Kao Co.Ltd.) |
| Epoxidized soybean oil | 4 parts by weight | O-130P (produced by Adeka-argus Co. Ltd.) |
| Stabilizer | As shown in Tables 2 and 3 | |
| Pigment (gray) | 4 parts by weight | (Produced by Sumika Color Co. Ltd.) |

EP 0 246 867 B1

## Table 2

### Stabilizer used in Example

| Example | Ba/Zn stabilizer (part by weight) | Perchlorate ion type hydrotalcite compound (part by weight) | Other additives (part by weight) |
|---|---|---|---|
| 1 | Ba octanoate 1.5<br>Zn octanoate 1.5 | 0.5 | |
| 2 | Ba octanoate 0.8<br>Zn octanoate 1.5 | 0.5 | |
| 3 | Ba octanoate 2.0<br>Zn octanoate 1.0 | 0.5 | |
| 4 | Ba octanoate 1.5<br>Zn octanoate 1.5 | 1.0 | |
| 5 | Ba octanoate 1.5<br>Zn octanoate 1.5 | 1.0 | Tris·nonylphenyl phosphite, 0.2 |
| 6 | Ba octanoate 1.5<br>Zn octanoate 1.5 | 1.0 | Stearoylbenzoylmethane, 0.1 |
| 7 | Ba octanoate 1.5<br>Zn octanoate 1.5 | 1.0 | $Mg(OH)_2$, 0.5<br>Tris·nonylphenyl phosphite, 0.1 |

EP 0 246 867 B1

Table 2 (continued)

| 8 | Ba octanoate 1.5<br>Zn octanoate 1.5 | 3.0 | $Mg(ClO_4)_2$, 1.0<br>Tris·nonylphenyl phosphite, 0.1 |
|---|---|---|---|
| 9 | Ba octanoate 1.5<br>Zn octanoate 1.5 | 1.0 | $Mg(ClO_4)_2$, 3.0<br>Tris·nonylphenyl phosphite, 0.1 |
| 10 | Ba octanoate 1.5<br>Zn octanoate 1.5 | 1.0 | $Ba(ClO_4)_2$, 1.0<br>Tris·nonylphenyl phosphite, 0.1 |
| 11 | Ba octanoate 1.5<br>Zn octanoate 1.5 | 3.0 | $Ba(ClO_4)_2$, 1.0<br>Tris·nonylphenyl phosphite, 0.1 |
| 12 | Ba octanoate 1.5<br>Zn octanoate 1.5 | 1.0 | $Ba(ClO_4)_2$, 3.0<br>Tris·nonylphenyl phosphite, 0.1 |

EP 0 246 867 B1

## Table 3

### Stabilizer used in Comparative example

| Comparative Example | Ba/Zn stabilizer (part by weight) | Mg compound (part by weight) |
|---|---|---|
| 1 | Ba stearate 1.5<br>Zn stearate 1.5 | None |
| 2 | Ba stearate 1.5<br>Zn laurate 1.5 | MgO, 0.5 |
| 3 | Ba laurate 1.5<br>Zn laurate 1.5 | $Mg(OH)_2$, 0.5 |
| 4 | Ba stearate 1.5<br>Zn laurate 1.5 | Hydrotalcite compound, 0.5<br>$Mg(ClO_4)_2$, 0.5 |
| 5 | Ba stearate 1.5<br>Zn laurate 1.0 | Perchlorate ion type hydrotalcite, 0.5 |

In the above Tables 2 and 3 the hydrotalcite compound was of the formula:

$$Mg_{1-0.31}Al_{0.31}(OH)_2 \cdot (CO_3)_{0.31/2} \cdot 0.54\ H_2O$$

and the perchlorate ion type hydrotalcite compound was of the structural formula:

$$Mg_{1-0.31}Al_{0.31}(OH)_2 \cdot (ClO_4)_2 \cdot 0.54\ H_2O$$

Each of the above powder compositions was evaluated for resistance to mold staining and also for amine resistance.

The resistance to mold staining was evaluated as follows: 100 grams of the powder composition was melt-attached to a nickel mirror plate 100 mm x 100 mm x 3 mm (thick) in size on an electric heating hot plate for 10 seconds when the temperature of the mirror plate reached 220°C. After removing the non-attached powder composition, the mirror plate was again placed on the hot plate, and the powder composition was heat-melted for 30 seconds. After water cooling, the formed sheet was peeled from the mirror plate and the degree of cloudiness of the mirror plate was examined. This procedure was repeated 40 times to evaluate the resistance of mold staining.

Further, in the same manner as above, evaluation by a continuous shot test on a nickel-plated embossed plate 100 mm x 100 mm x 3 mm (thick) in size was carried out. As to representative examples, evaluation by a continuous shot test on a rotational or slush molding machine equipped with an automatic controller [using a nickel-plated mold 300 mm x 300 mm x 250 mm (high) in size heated with 270°C heat medium oil] was additionally conducted.

The amine resistance test was carried out as follows: A formed sheet 300 mm x 300 mm x 0.8 mm (thick) in size produced by powder molding was placed, with its embossed surface faced downwards, on an aluminum support frame 300 mm x 300 mm x 10 mm (thick) in size. Thereafter, 153 g of a polyol/polyisocyanate mixture, prepared by mixing a previously prepared polyol mixture containing water, triethanolamine, triethylenediamine and polyol composed mainly of glycerin/propylene oxide adduct and glycerin/ethylene oxide adduct with Polymeric MDI having an NCO content of 30.5 % in a former to latter ratio of 100 to 50 (part by weight), was mixed on a high-speed mixer for 10 seconds, and the mixture was injected into the aluminum support frame. By clamping the mold, a urethane foam was attached to the back surface of the sheet.

This urethane-attached sheet was cut into test pieces 70 mm x 150 mm in size, and four test pieces each were placed in a Geer oven type heating furnace wherein the temperature of the atmosphere was 110°C and a Sunshine weather-O-meter wherein the temperature of the black panel was 83°C, so that one test piece could be taken out at every 100 hours. Thus, a 400 hours' discoloration test was conducted.

Table 4   Evaluation of resistance to mold staining

| Number of continuous shots | (A) Ni mirror plate | | | | (B) Embossed Ni plate | | | | (C) Oil-heated mold | | | |
|---|---|---|---|---|---|---|---|---|---|---|---|---|
| | 10 | 20 | 30 | 40 | 10 | 20 | 30 | 40 | 10 | 20 | 30 | 40 |
| Example 1 | ○ | ○ | ○ | ○ | ○ | ○ | ○ | ○ | ○ | ○ | ○ | ○ |
| " 2 | ○ | ○ | ○ | ○ | ○ | ○ | ○ | ○ | ○ | ○ | ○ | ○ |
| " 3 | ○ | ○ | ○ | ○ | ○ | ○ | ○ | ○ | ○ | ○ | ○ | ○ |
| " 4 | ○ | ○ | ○ | ○ | ○ | ○ | ○ | ○ | ○ | ○ | ○ | ○ |
| " 5 | ○ | ○ | ○ | ○ | ○ | ○ | ○ | ○ | ○ | ○ | ○ | ○ |
| " 6 | ○ | ○ | ○ | ○ | ○ | ○ | ○ | ○ | ○ | ○ | ○ | ○ |
| " 7 | ○ | ○ | ○ | ○ | ○ | ○ | ○ | ○ | ○ | ○ | ○ | ○ |
| " 8 | ○ | ○ | ○ | ○ | ○ | ○ | ○ | ○ | ○ | ○ | ○ | ○ |
| " 9 | ○ | ○ | ○ | ○ | ○ | ○ | ○ | ○ | ○ | ○ | ○ | ○ |
| " 10 | ○ | ○ | ○ | ○ | ○ | ○ | ○ | ○ | ○ | ○ | ○ | ○ |
| " 11 | ○ | ○ | ○ | ○ | ○ | ○ | ○ | ○ | ○ | ○ | ○ | ○ |
| " 12 | ○ | ○ | ○ | ○ | ○ | ○ | ○ | ○ | ○ | ○ | ○ | ○ |
| Comparative example 1 | ○ | Δ | × | × | ○ | ○ | Δ | Δ | ○ | Δ | Δ | × |
| " 2 | ○ | Δ | × | × | ○ | ○ | Δ | Δ | ○ | Δ | Δ | × |
| " 3 | ○ | Δ | × | × | ○ | ○ | Δ | Δ | ○ | Δ | Δ | × |
| " 4 | ○ | Δ | × | × | ○ | ○ | Δ | Δ | ○ | Δ | Δ | × |
| " 5 | ○ | Δ | × | × | ○ | ○ | Δ | Δ | ○ | Δ | Δ | × |

Standard of evaluation:

| (A) Ni mirror plate | (B) Embossed Ni plate | (C) Oil-heated mold (degree of stain of gauze used for cleaning the mold) |
|---|---|---|
| ○ Little cloudiness | Little stain | Little yellowish stain |
| Δ Slight cloudiness | Slight stain | Slight yellowish stain |
| × Much cloudiness | Much stain | Much yellowish stain |

The results are shown in the following Tables 4 and 5.

EP 0 246 867 B1

Table 5

Amine resistance

| Time elapsed (hour) | Thermal stability expressed by rating (GO 110°C) | | | | Light resistance expressed by rating (SWOM 83°C) | | | |
|---|---|---|---|---|---|---|---|---|
| | 100 | 200 | 300 | 400 | 100 | 200 | 300 | 400 |
| Example 1 | 5 | 5-4 | 5-4 | 4 | 5 | 5 | 5-4 | 5-4 |
| " 2 | 5 | 5-4 | 5-4 | 4 | 5 | 5 | 5-4 | 5-4 |
| " 3 | 5 | 5-4 | 5-4 | 4 | 5 | 5 | 5-4 | 5-4 |
| " 4 | 5 | 5-4 | 5-4 | 4 | 5 | 5 | 5-4 | 5-4 |
| " 5 | 5 | 5-4 | 5-4 | 5-4 | 5 | 5 | 5-4 | 5-4 |
| " 6 | 5 | 5-4 | 5-4 | 5-4 | 5 | 5 | 5-4 | 5-4 |
| " 7 | 5 | 5-4 | 5-4 | 5-4 | 5 | 5 | 5-4 | 5-4 |
| " 8 | 5 | 5 | 5 | 5-4 | 5 | 5 | 5 | 5 |
| " 9 | 5 | 5 | 5 | 5-4 | 5 | 5 | 5 | 5 |
| " 10 | 5 | 5 | 5-4 | 5-4 | 5 | 5 | 5 | 5-4 |
| " 11 | 5 | 5 | 5 | 5-4 | 5 | 5 | 5 | 5 |
| " 12 | 5 | 5 | 5-4 | 5-4 | 5 | 5 | 5 | 5-4 |
| Comparative example 1 | 5 | 4 | 4-3 | 3 | 5 | 5-4 | 4 | 4-3 |
| " 2 | 5 | 5-4 | 4 | 3 | 5 | 5-4 | 4 | 4-3 |
| " 3 | 5 | 5-4 | 4 | 3 | 5 | 5-4 | 4 | 4-3 |
| " 4 | 5 | 5-4 | 4 | 4 | 5 | 5 | 5-4 | 4 |
| " 5 | 5 | 5-4 | 5-4 | 5-4 | 5 | 5 | 5-4 | 5-4 |

Standard of evaluation: Staining or change in color based on the gray scales.

Rating: 5 No change

4 Slight faint change

```
3    Slight but clearly observable change

2    Slightly  marked    change

1    Fairly  marked    change

GO      Geer oven

SWOM    Sunshine weather-O-meter
```

## Claims

1. A polyvinyl chloride resin powder moulding composition which comprises by weight (i) 100 parts of polyvinyl chloride resin, (ii) 0.1 to 10 parts of stabilizer mixture represented by the formula:

$$(RCOO)_2 Me$$

wherein R is selected from alkyl groups having 5 to 8 carbon atoms and Me represents a mixture of barium and zinc, the barium and zinc metallic weight ratio being 1:5 to 5:1, and (iii) from 0.1 to 10 parts of perchlorate ion type hydrotalcite compound of the formula:

$$Mg_{1-x}Al_x(OH)_2 \cdot (ClO_4)_2 \cdot mH_2O$$

wherein $\underline{x}$ is a number satisfying the equation $0 < x \leq 0.5$ and $\underline{m}$ represents a positive number of 5 or less.

2. A composition according to claim 1 wherein the stabilizer mixture is a mixture of barium compound type stabilizer selected from barium nonanoate, barium octanoate, barium 2-ethylhexanoate, barium heptanoate and barium hexanoate and zinc compound type stabilizer selected from zinc nonanoate, zinc octanoate, zinc 2-ethylhexanoate, zinc heptanoate and zinc hexanoate.

3. A composition according to any preceding claim which further contains 0.1 to 10 parts by weight of metal perchlorate per 100 parts by weight of the polyvinyl chloride resin.

4. A composition according to claim 3 wherein the ratio of the perchlorate ion type hydrotalcite compound to metal perchlorate is 1:9 to 9:1 by weight.

5. A composition according to claim 3 or 4 wherein the metal perchlorate is selected from magnesium perchlorate and barium perchlorate.

6. The use for powder molding of a composition according to any preceding claim.

7. A product powder-molded from a composition according to any of claims 1 to 5.

8. A product according to claim 7 in combination with an in situ formed polyurethane foam.

## Patentansprüche

1. Polyvinylchloridharz-Pulverformmassen-Zusammensetzung, die umfaßt
   (i) 100 Gewichtsteile Polyvinylchloridharz,
   (ii) 0.1 bis 10 Gewichtsteile einer Stabilisierungsmittelmischung, dargestellt durch die folgende Formel:

$$(RCOO)_2 Me$$

EP 0 246 867 B1

worin R ausgewählt ist aus Alkylgruppen mit 5 bis 8 Kohlenstoffatomen und Me eine Mischung aus Barium und Zink darstellt, wobei das Barium und Zinkmetallgewichtsverhältnis zwischen 1 : 5 bis 5 : 1 liegt, und (iii) 0.1 bis 10 Teile einer Perchlorat-Ionen-Typ-Hydrotalcitverbindung der Formel:

$$Mg_{1-x}Al_x(OH)_2 \cdot (ClO_4)_2 \cdot mH_2O$$

ist, worin $\underline{x}$ eine Zahl ist, die der Gleichung $0 < x \leqq 0.5$ genügt und $\underline{m}$ eine positive Zahl von 5 oder weniger darstellt.

**2.** Zusammensetzung gemäß Anspruch 1, bei der die Stabilisierungsmittelmischung eine Mischung aus einem Stabilisierungsmittel aus einer Barium-Typ-Verbindung ist, ausgewählt aus Bariumnonanoat, Bariumoctanoat, Barium-2-ethylhexanoat, Bariumheptanoat und Bariumhexanoat und das Stabilisierungsmittel einer Zink-Typ-Verbindung ausgewählt ist aus Zinknonanoate, Zinkoctanoat, Zink-2-ethylhexanoat, Zinkheptanoat und Zinkhexanoat.

**3.** Zusammensetzung gemäß irgendeinem vorhergehenden Anspruch, die weiter 0.1 bis 10 Gewichtsteile Metallperchlorat pro 100 Gewichtsteile des Polyvinylchloridharzes enthält.

**4.** Zusammensetzung gemäß Anspruch 3, bei dem das Verhältnis der Perchlorat-Ionen-TyP-Hydrotalcitverbindung zum Metallperchlorat 1 : 9 bis 9 : 1 Gewichtsteile ist.

**5.** Zusammensetzung gemäß den Ansprüchen 3 oder 4, bei der das Metallperchlorat ausgewählt ist aus Magnesiumperchlorat und Bariumperchlorat.

**6.** Verwendung einer Zusammensetzung gemäß irgendeinem vorhergehenden Anspruch für das Pulverschmelzverfahren.

**7.** Formmassepulverprodukt einer Zusammensetzung gemäß irgendeinem der Ansprüche 1 bis 5.

**8.** Produkt gemäß Anspruch 7 in Kombination mit einem in situ geformten Polyurethanschaum.

**Revendications**

**1.** Composition de moulage de poudre à base d'une résine d'un polymère de chlorure de vinyle, qui comprend, en poids, (i) 100 parties d'une résine de polymère de chlorure de vinyle, (ii) 0,1 à 10 parties d'un mélange de stabilisants représenté par la formule :

$$(RCOO)_2Me$$

dans laquelle R est choisi entre des groupes alkyle ayant 5 à 8 atomes de carbone et Me représente un mélange de baryum et de zinc, le rapport pondéral du baryum métallique au zinc métallique étant compris dans l'intervalle de 1:5 à 5:1, et (iii) 0,1 à 10 parties d'une hydrotalcite renfermant l'ion perchlorate, de formule :

$$Mg_{1-x}Al_x(OH)_2 \cdot (ClO_4)_2 \cdot mH_2O$$

dans laquelle x est un nombre satisfaisant à l'équation $0 < x \leqq 0,5$ et $\underline{m}$ représente un nombre positif égal ou inférieur à 5.

**2.** Composition suivant la revendication 1, dans laquelle le mélange de stabilisants est un mélange d'un stabilisant du type composé de baryum choisi entre le nonaoate de baryum, l'octanoate de baryum, le 2-éthyl-hexanoate de baryum, l'heptanoate de baryum et l'hexanoate de baryum, et d'un stabilisant du type composé de zinc choisi entre le nonanoate de zinc, l'octanoate de zinc, le 2-éthylhexanoate de zinc, l'heptanoate de zinc et l'hexanoate de zinc.

**3.** Composition suivant l'une quelconque des revendications précédentes, qui contient en outre 0,1 à 10 parties en poids de perchlorate métallique pour 100 parties en poids de la résine de polymère de chlorure de vinyle.

14

**4.** Composition suivant la revendication 3, dans laquelle le rapport de l'hydrotalcite renfermant l'ion perchlorate au perchlorate métallique est compris dans l'intervalle de 1:9 à 9:1 en poids.

**5.** Composition suivant la revendication 3 ou 4, dans laquelle le perchlorate métallique est choisi entre le perchlorate de magnésium et le perchlorate de baryum.

**6.** Utilisation pour le moulage de poudre d'une composition suivant l'une quelconque des revendications précédentes.

**7.** Produit formé par moulage de poudre à partir d'une composition suivant l'une quelconque des revendications 1 à 5.

**8.** Produit suivant la revendication 7, en association avec une mousse de polyuréthanne formée in situ.